(19) Europäisches Patentamt
European Patent Office
Office européen des brevets

(11) **EP 2 056 435 B1**

(12) **EUROPEAN PATENT SPECIFICATION**

(45) Date of publication and mention
of the grant of the patent:
**02.07.2014   Bulletin 2014/27**

(51) Int Cl.:
***H02M 3/00*** *(2006.01)*

(21) Application number: **08018214.0**

(22) Date of filing: **17.10.2008**

(54) **Controllable circuit**

Steuerbarer Schaltkreis

Circuit contrôlable

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.10.2007   EP 07021329**

(43) Date of publication of application:
**06.05.2009   Bulletin 2009/19**

(73) Proprietor: **Harman Becker Automotive Systems
GmbH
76307 Karlsbad (DE)**

(72) Inventor: **Knott, Arnold
94336 Hunderdorf (DE)**

(74) Representative: **Schmuckermaier, Bernhard
Westphal, Mussgnug & Partner
Patentanwälte
Herzog-Wilhelm-Strasse 26
80331 München (DE)**

(56) References cited:
**US-A1- 2007 176 660**

**Description**

BACKGROUND OF INVENTION

1. Field Of Technology

This invention relates to controllable circuits, and in particular to switch-mode power circuits such as, e.g., switch-mode power supplies, switch-mode power amplifiers etc.

The japanese patent publication JP2007097389 discloses an electric power conversion circuit with controllable switches which are pwm controlled by a control circuit comprising two comparators which compare two carrier signals of different frequencies to an output signal of a voltage regulator, AVR and output the comparison result signals to a selecting circuit which is controlled in from a control circuit in dependence of the AVR signal.

2. Related Art

US 2007/0176660 A1 refers to a method for pulse width modulating asymmetric signal levels. Further, US 2003/0103361 A1 describes a method for generating a pulse width modulated control signal; the method comprises the steps of providing a base carrier waveform, segmenting the base carrier waveform into a plurality of carrier waveforms, and providing at least one modulating signal. The first and second waveforms are compared to the at least one modulating signal to produce first and second comparator outputs, which are then arithmetically combined to produce a pulse width modulated control signal.

Switch-mode power circuits generate a broad band spectrum due to their high speed signals. Such broad band spectral components can disturb other electronic equipment like receivers used in communication systems. Approaches to lower high frequency signal contents in switch-mode power circuits lead to extensive filter components and shielding. The filter components need to be designed for high voltage and current levels and therefore are bulky, expensive and dissipative. The implementation of shielding is difficult as the mechanical ef-forts need to be combined with electrical isolation due to different electrical potentials on various conductive elements of power components. This intrinsically leads to trade offs between good thermal and good electrical design and compromises need to be made on both parts of the design.

There is a general need to improve switching power circuits for the reason outlined above.

SUMMARY

A circuit is disclosed herein that comprises a controllable element that controls a current in response to a control signal supplied to the controllable element; and a control unit connected to the controllable element and providing the control signal. The control unit comprises: a first signal processing unit having an output and being supplied with a first carrier signal and an input signal; a second signal processing unit having an output and being supplied with a second carrier signal and the input signal; and a combiner unit connected to the first and second signal processing units combining the outputs of the first and second signal processing units to form a signal representative of the control signal.

BRIEF DESCRIPTION OF THE DRAWINGS

The invention can be better understood with reference to the following drawings and description. The components in the figures are not necessarily to scale, instead emphasis being placed upon illustrating the principles of the invention. Moreover, in the figures, like reference numerals designate corresponding parts. In the drawings:

FIG. 1 is a block diagram of a switch-mode power circuit;

FIG. 2 is a diagram showing a comparison between a single carrier modulated signal and a multi carrier modulated signal;

FIG. 3 is a block diagram of a ORed multi carrier modulator arrangement;

FIG. 4 is a block diagram of a ANDed multi carrier modulator arrangement;

FIG. 5 shows simulation results of ORed MCM with two carriers;

FIG. 6 shows simulation results of ORed MCM with three carriers;

FIG. 7 shows the statistical distribution of ones and zeros in OR and AND operations;

FIG. 8 shows waveforms and spectra of a known single carrier modulation;

FIG. 9 shows waveforms and spectra of an ORed multi carrier modulation;

FIG. 10 shows waveforms and spectra of an ANDed multi carrier modulation;

FIG. 11 is a block diagram of a circuit arrangement that switches after each output pulse between ORed modulation and ANDed modulation;

FIG. 12 shows waveforms and spectra of the two-carrier modulation arrangement of FIG. 11;

FIG. 13 is a block diagram of a circuit arrangement that switches dependant on a master carrier; and

FIG. 14 shows waveforms and spectra of the two-carrier modulation arrangement of FIG. 13.

DETAILED DESCRIPTION

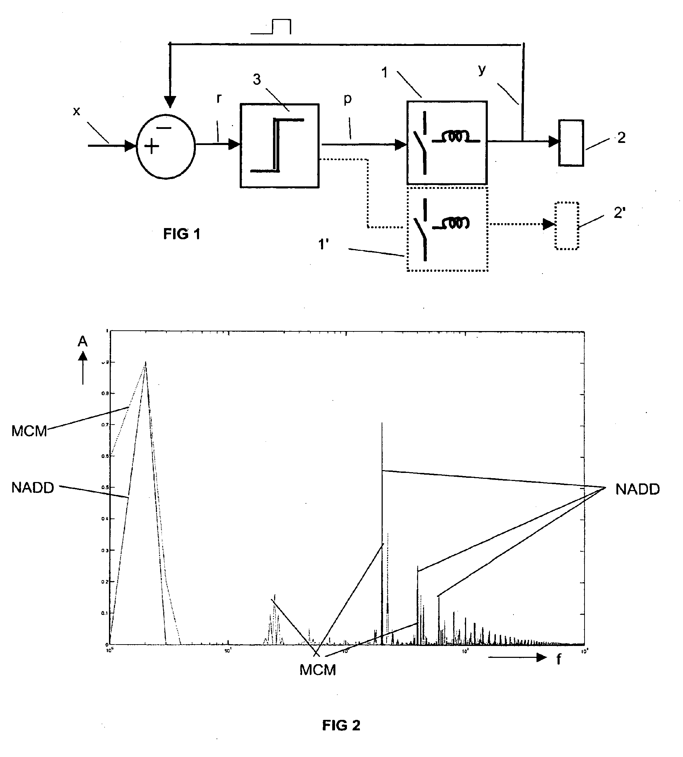

FIG. 1 is a block diagram of a switch-mode power circuit comprising as a controllable element a controllable switch 1 that switches a current through a load 2 dependant on a control signal p supplied to the switch 1 by a control unit 3 connected to the switch 1. The switch 1 may be, e.g., a transistor such as a bipolar transistor or a MOS field effect transistor or the like. Instead of only one switch as shown in FIG. 1 for the sake of simplicity, also an array of switches, e.g. a half bridge or a full bridge arrangement of switches, adequately controlled by the control signal and an inverted control signal may be involved. The load 2 may be a coil of switched power supply, the voice coil of a loudspeaker, an ohmic load provided by a heating element, an other switch-mode power circuit etc. The control unit 3 may comprise as a signal processing unit a modulator arrangement, e.g., a frequency or pulse width modulator arrangement providing a signal p whose frequency or pulse width is dependant on a modulation signal r forming an input signal supplied to the control unit 3 where r=a(y-x) with x being a modulation signal and y being a rectangular signal that is supplied to the load 2 and forms a carrier signal clocking the switch-mode power circuit. The signal p (or the inverted signal p) may be supplied also to at least one further switch 1' switching a load 2' (or the load 2, e.g., in case of a bridge circuit).

Conventional switch power circuits comprise modulator arrangements using no carrier or only one carrier signal to be, e.g., frequency modulated or pulse width modulated (PWM) and create high frequency (HF) bands at multiples of the carrier frequency and their sidebands. The arrangements disclosed herein use at least two carriers with different frequencies resulting in multiple HF bands which also may overlap. Such modulator arrangements are referred to as multi-carrier modulators (MCM) in the following description. The carriers are fed into different modulators and combined with a reference signal r. To drive a power switch, e.g. a transistor, the outputs of the several modulators are combined to a resulting bit stream. Possible combinations of two or more modulators and their attributes are shown below whereby comparators serve as modulators. In case of more than two modulators, the AND or OR gates may have more than two inputs.

A simple decision rule may be an OR operation or an AND operation of the comparator outputs. The rules for deciding in the time domain whether the output of the modulator arrangement (control unit) is low or high is illustrated in the following equation 1:

$$p = 1 \text{ if } r < \text{car1 or } r < \text{car2}$$
$$p = 0 \text{ else}$$
$$p = 1 \text{ if } r < \text{car1 \& } r < \text{car2}$$
$$p = 0 \text{ else}$$

where p is the bit-stream output, r is the reference signal and car1 and car2 are the two carrier signals. However, the arrangement is not limited to two carriers. The directions of the inequality can be changed, resulting in a phase shift of 180°.

FIG. 2 is a diagram illustrating a comparison between a single carrier modulated signal and a multi carrier modulated signal combined with an OR. The modulation signal (in the present case with a frequency f of 2Hz) keeps its full amplitude A while the carriers and its sidebands are half the amplitude A when using multi-carrier modulation (MCM) such as an ORed (i.e., combined by an OR operation) multi carrier modulation instead of a single-carrier modulation such as a known natural sampled, double side modulated pulse width modulation (NADD). There are twice as much peaks with ORed MCM than with NADD. A further spectral component occurring is the intermodulation between the two carriers and their side bands. This is very beneficial because energy may be put into a band where communication systems available in the market do not operate, e.g., basebands of cellular phones have their cut-off frequencies below this frequency range. The utilization of this out-of-band intermodulation (OIM) band can be adjusted by the distance of the two carriers in frequency and/or the bandwidth around them.

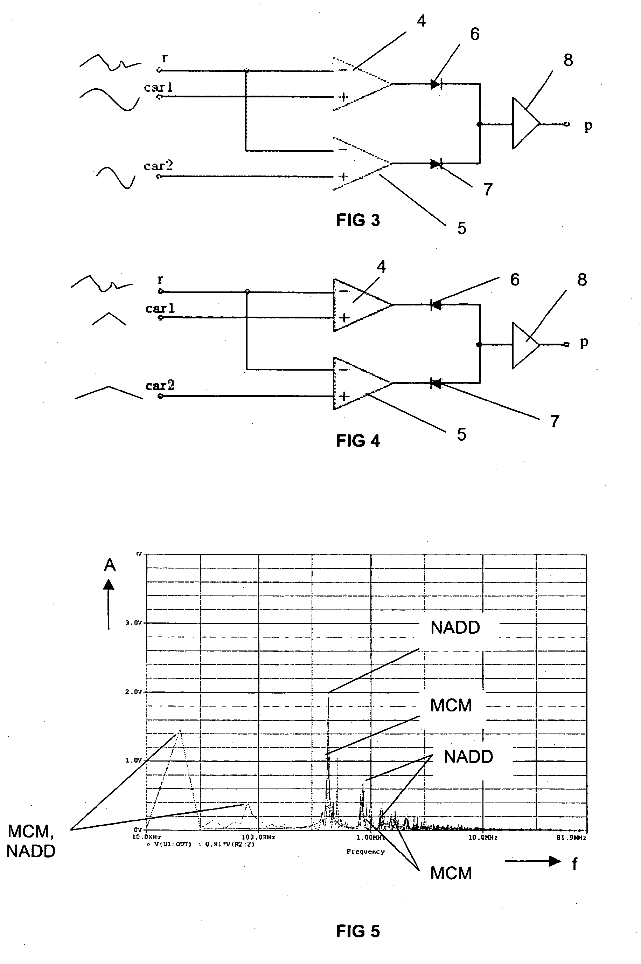

FIG. 3 is a block diagram of a ORed MCM arrangement using comparators 4, 5 as modulators and standard diodes 6, 7 operated as wired OR gate. The comparators each having two inputs and an output where the inputs of each comparator 4, 5 are supplied with the reference signal r and one of the carrier signals car1, car2, respectively. Signal r may have any kind of waveform and signals car1, car2 may be sinusoidal signals as shown in the present example. The outputs are OR wired by means of the diodes 6, 7 such that the cathodes of the diodes 6, 7 are connected together forming an output for the control signal p. The arrangement of FIG. 4 differs from the one shown in FIG. 3 only in that the diodes 6, 7 have opposite polarities (i.e., the anodes are connected together forming an AND gate) and that the carrier signals car1, car2 have a triangular waveform. If, in the arrangements of FIGS. 3 and 4, the voltage drop across the diodes 6, 7 is disadvantageous, the signal can be retriggered with a driver 8 (e.g., a Schmitt trigger, inverter, comparator, amplifier etc.) connected downstream of the OR gate or AND gate established by diodes 6 and 7. Pull-up or pull down resistors after the diode logic may be applied dependent on the input attributes of the following stage.

The results of a simulation using models of the particular physical components are shown in FIG. 5 which match the calculation results illustrated in FIG. 2. The signal was retriggered in this simulation as shown in FIGS. 3 and 4. The ORed and ANDed MCM may be extended to N carriers where N is an integer number. For each additional carrier, the peaks of the fundamentals are lowered by a = 1/N while the number of peaks increases by N.

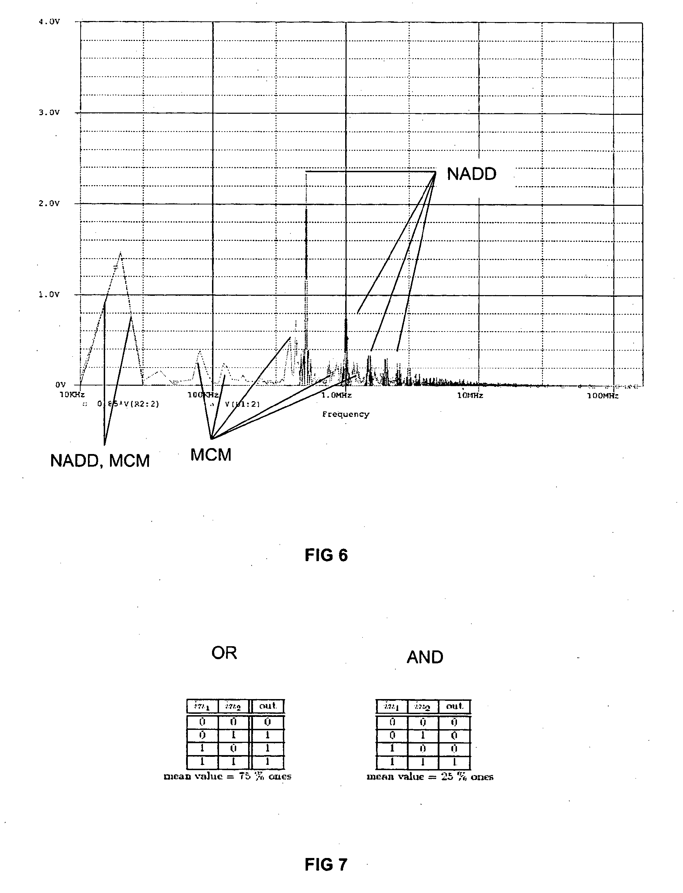

FIG. 6 illustrates the behaviour of a novel switch-mode power circuit when increasing the number of carriers to three. Both, ANDed and ORed MCM, generate a direct current (DC) offset. This offset is resulting from the statistical distribution of highs and lows in the two logical operations shown in the truth tables of FIG 7. Another applicable logic operation is XOR having a 50% occurrence resulting in no DC offset. However, an XOR has 50% redundancy in its truth table due to its symmetry where this symmetry results in a doubling of the frequency of the modulation signal at the output. This is for some applications less desirable. Both, ANDing and ORing MCM have a decent amount of second order total harmonic distortion (THD2nd). For power supplies with low line and load regulation demands, these modulator topologies are adequate, especially due to the low complexity. Amplifiers with low distortion demands and high EMI requirements benefit also from these modulation schemes.

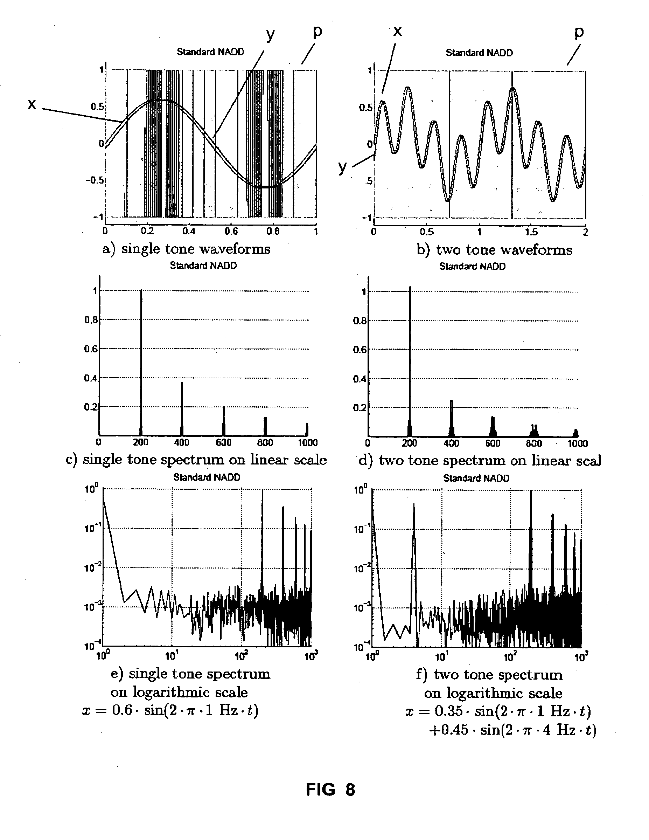

FIG. 8 shows waveforms and spectra of a single carrier modulation. FIG. 8 a) shows the waveforms of signals r, p and y for a sinusoidal stimulation r. FIG 8a c) shows the spectrum of waveform of signals p as shown in FIG. 8 a) on a linear frequency scale. FIG. 8 e) shows the spectrum of waveform of signals p as shown in FIG. 8 a) on a logarithmic scale. FIG. 8 b) shows the waveforms of signals r, p and y for two superimposed sinusoidal stimulations r. FIG. 8 d) shows the spectrum of waveform p as shown in FIG. 8 b) on a linear frequency scale. FIG. 8 f) shows the spectrum of waveform of signals p as shown in FIG. 8 b) on a logarithmic scale. It is desired that, e.g., in the audio band (e.g., 20 Hz-20kHz), no spectral component occurs other than the reference signal r supplied to the modulator.

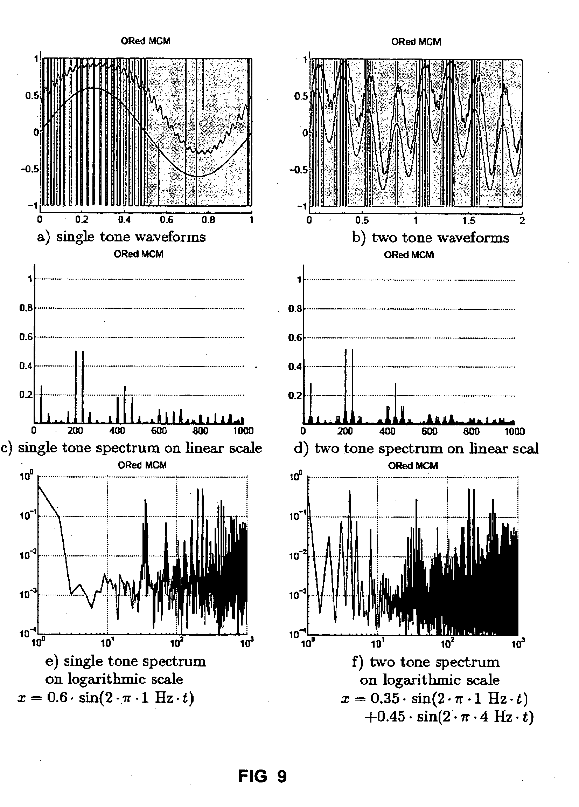

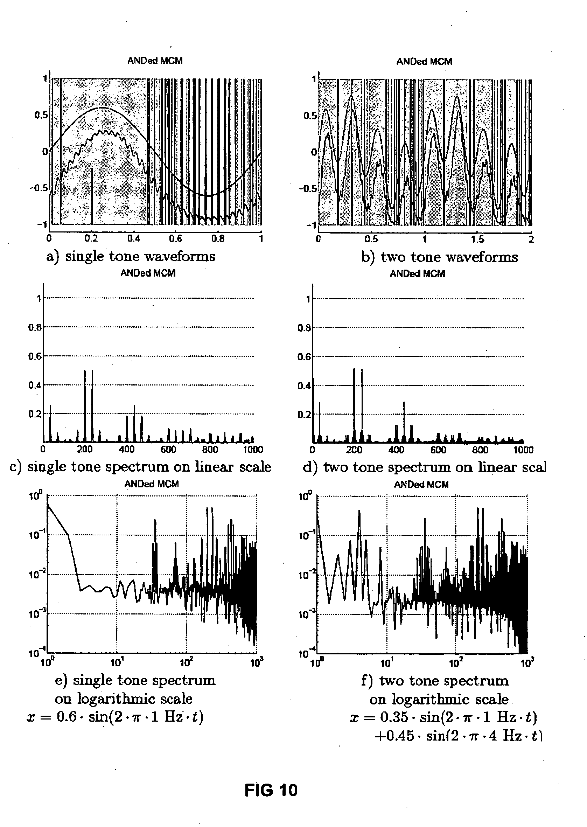

FIGS. 9 und 10 show waveforms and spectra for ANDed and ORed multi carrier modulation, respectively. In the spectrum of the signal p that controls a transistor 19, the frequency of the reference signal r has the same amplitude as in single carrier system, however, the amplitude of higher frequency components is reduced to half.

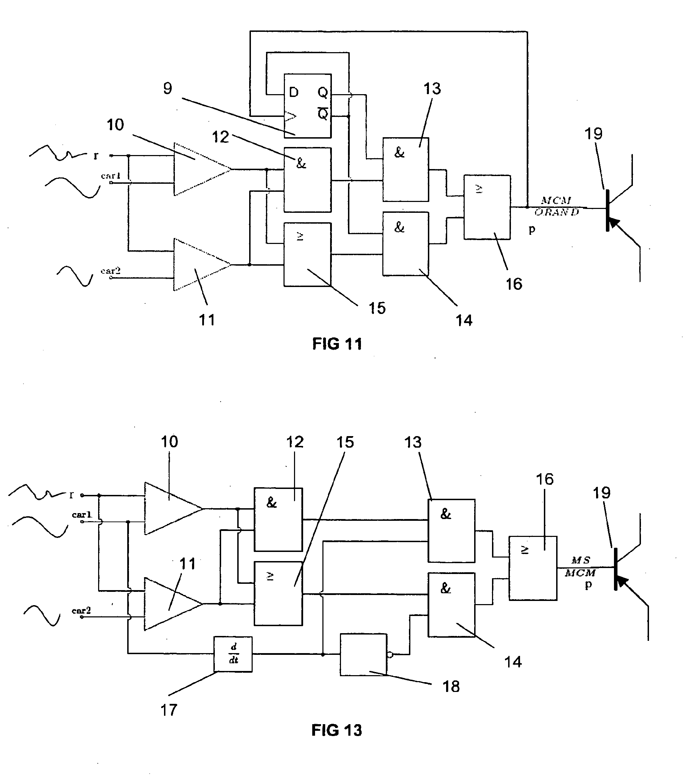

Another approach to cancel the undesired DC effects of ORing and ANDing, as shown above, is to switch after each resulting pulse between the ORed PWM result and the ANDed PWM result. A circuit arrangement implementing this technique is shown in FIG. 11. which is a block diagram of an MCM arrangement using comparators 10, 11 as modulators and standard OR gates 12, 13, 14 and AND gates 15, 16. The comparators 10, 11 each having two inputs and an output where the inputs of each comparator 4, 5 are supplied with the reference signal r and one of the carrier signals car1, car2, respectively. The outputs are fed into an OR gate and into an AND gate by means of gates 12 and 15.

The arrangement of FIG. 11 further comprises a sampling element, having a clock input >, a data input D, an output Q and an inverted output $\overline{Q}$. The data input D of the sample element 9 is supplied with the signal at the inverted output $\overline{Q}$ of the sample element 9. The inputs of AND gate 13 are connected to the outputs of the sampling element 9 and the AND gate 12. The inputs of AND gate 14 are connected to the outputs of the sample element 9 and the OR gate 15. The inputs of OR gate 16 that provides the load signal y are connected to the outputs of the AND gates 13 and 14.

The sampling element 9, e.g., a D-type flip-flop, alternately allows only one of ORed PWM and ANDed PWM to pass. For further lowering of high frequency peaks according to equation 1, ORing and ANDing PWM can have multiple inputs coming from multiple comparators where each of them has its own carrier. Applying an ORANDed MCM causes the DC as well as the second order harmonic distortion THD2nd to vanish, however it rises the third order harmonic distortion THD3rd. Additionally, the gain of such arrangement is higher than 1.

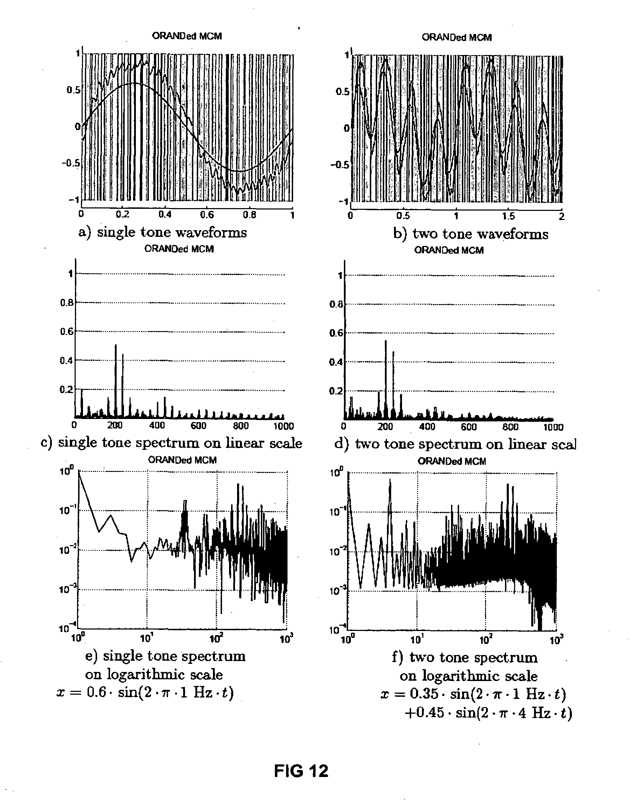

FIG. 12 shows waveforms and spectra of the two-carrier modulation arrangement of FIG. 11. As can be readily seen from FIG. 12, the high frequency peaks are suppressed and the intermodulation frequency is reduced to zero. The side bands with a distance from the carrier that is equal to the frequency of the reference signal r. As there is no DC component in the spectrum, ORANDed MCM can be used for switch-mode power supplies as well as amplifiers or any other kind of PWM driven application. The intermodulations in the audio band (e.g., 20Hz - 20kHz) resulting from, e.g., two sinusoidal carrier signals are reduced so that this type of switch-power circuit can also be used in frequency converter application, for example, to convert a 400 Hz aircraft power supply to a 50Hz or 60Hz in, particularly, audio applications.

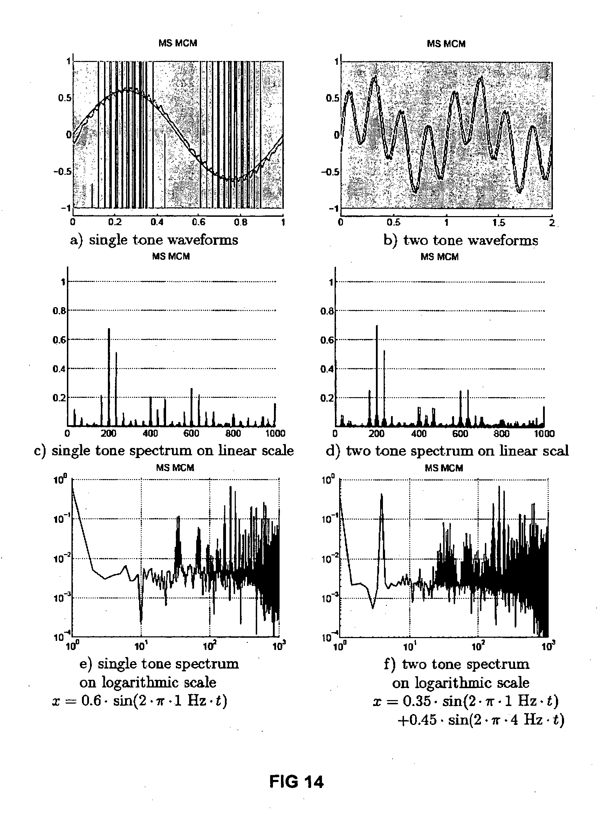

Master-Slave (MS) MCM may include a master carrier and one or more slave carriers where the slope of the master carrier determines whether the ORed MCM or the ANDed MCM is passed into the single bitstream forming the signal p. An example of such arrangement is shown in FIG. 13. The arrangement of FIG. 13 differs from the one shown in FIG. 11 in that the sample element is substituted by a differentiating element that is supplied with carrier car1 (master carrier) and provides a differentiated signal to AND gate 13 and an inverted (by means of an inverter 18), differentiated signal to AND gate 14. Instead of differentiating the carrier signal car1, as shown, a differentiated carrier signal may be used that is supplied to the comparator 10 via an integrator. This arrangement allows for a very high linearity while still lowering the complete out-of-band spectrum as shown in FIG. 14. This arrangement is capable of driving any kind of PWM system, including high-class switch-mode (audio) power amplifiers and power supplies.

The multi-carrier modulation lowers the amplitude of the whole spectrum of a switch-mode modulator while keeping the inband performance, uses more frequencies and is very easy to implement therefore it saves cost, space, and complexity in switch-mode power circuits.

Although various exemplary embodiments of the invention have been disclosed, it will be apparent to those skilled in the art that various changes and modifications can be made which will achieve some of the advantages of the invention without departing from the scope of the invention. It will be obvious to those reasonably skilled in the art that other components performing the same functions may be suitably substituted. Instead of comparators. e.g., multipliers or differential amplifiers may be used as modulators. Further, the methods of the invention may be achieved in either all software implementations, using the appropriate processor instructions, or in hybrid implementations that utilize a combination of hardware logic and software logic to achieve the same results.

**Claims**

1.  A circuit comprising:

    a controllable element (1) that controls a current in response to a control signal (8) supplied to the controllable element (1); and
    a control unit (3) connected to the controllable element (1) and providing the control signal (p); the control unit (3) comprises:

    a first signal processing unit (4, 10) having an output and being supplied with a first carrier (car1) signal and an input signal (r);
    a second signal processing unit (5, 11) having an output and being supplied with a second carrier signal (car2) and the input signal (r), the first and the second carrier signals (car1, car2) having different frequencies; and
    a combiner unit (6, 7, 12, 13, 14, 15, 16) connected to the first and second signal processing units combining the outputs of the first and second signal processing units to form a signal representative of the control signal (p), wherein the controllable element (1) is a controllable switch that switches the load current on and off dependant on the control signal (p),
    wherein the combiner unit (6, 7, 12, 13, 14, 15, 16) is a logic unit that is adapted to combine the outputs of the first and second signal processing unit to form a binary signal representative of the control signal (p), wherein the logic unit comprises a first AND gate (12), a first OR gate (15) and a second OR gate (16) each having at least two inputs and an output; the inputs of the first AND gate (12) and the first OR gate (15) are each coupled with the outputs of the signal processing units (10, 11); the outputs of the first AND gate (12) and the first OR gate (15) are coupled with the inputs of the second OR gate (16) whose output provides the control signal (p); and
    wherein the logic unit further comprises a second AND gate (13), and a third AND gate (14), each having two or more inputs and an output; the second AND gate (13) is supplied with a differentiated master carrier signal and the output of the first AND gate (12); the third AND gate (14) is supplied with the inverted differentiated master carrier signal and the output of the first OR gate (15); and the second OR gate (16) is connected to the outputs of the second and third AND gates (13, 14), and provides the control signal (p).

**2.** The circuit of claim 1 where one of the carrier signals (car1, car2) is a master carrier signal (car1) that comprises a certain slope and where the output of the first AND gate (12) or the first OR gate (15) provides the control signal (p) that depends on the slope of the master carrier signal (car1).

**3.** A circuit comprising:

a controllable element (1) that controls a current in response to a control signal (8) supplied to the controllable element (1); and
a control unit (3) connected to the controllable element (1) and providing the control signal (p); the control unit (3) comprises:

a first signal processing unit (4, 10) having an output and being supplied with a first carrier (car1) signal and an input signal (r);
a second signal processing unit (5, 11) having an output and being supplied with a second carrier signal (car2) and the input signal (r), the first and the second carrier signals (car1, car2) having different frequencies; and
a combiner unit (6, 7, 12, 13, 14, 15, 16) connected to the first and second signal processing units combining the outputs of the first and second signal processing units to form a signal representative of the control signal (p),
wherein the controllable element (1) is a controllable switch that switches the load current on and off dependant on the control signal (p),
wherein the combiner unit (6, 7, 12, 13, 14, 15, 16) is a logic unit that is adapted to combine the outputs of the first and second signal processing unit to form a binary signal representative of the control signal (p),
wherein the logic unit comprises a first AND gate (12), a first OR gate (15) and a second OR gate (16) each having at least two inputs and an output; the inputs of the first AND gate (12) and the first OR gate (15) are each coupled with the outputs of the signal processing units (10, 11); the outputs of the first AND gate (12) and the first OR gate (15) are coupled with the inputs of the second OR gate (16) whose output provides the control signal (p); and
wherein the control signal (p) comprises pulses and, alternating with each pulse, the control signal is provided by the first OR gate (15) or the first AND gate (12).

**4.** The circuit of claim 3 where
the logic unit further comprises a second AND gate (13), a third AND gate (14), and a sample element (9), each having one or more inputs and an output;
one input of the sample element (a) being supplied with the inverted output signal of the sample element (9);
the second AND gate (13) is connected to the noninverted output of the sample element (9) and the first AND gate (12);
the third AND gate (14) is connected to the inverted output of the sample element (a) and the output of the first OR gate (15); and
the second OR gate (16) is connected to the outputs of the second and third AND gates (13, 14), and provides the control signal (p).

**5.** The circuit of one of claims 1 to 4 where the signal processing units (4, 5, 10, 11) comprise comparators each having inputs and an output; the inputs are supplied with the input signal (r) and one of the carrier signals (car1, car2).

**6.** The circuit of one of claims 1 to 5 where the signal processing units (4, 5, 10, 11) are adapted to generate pulse width modulated signals.

**7.** The circuit of one of claims 1 to 6 where the carrier signals (car1, car2) have a rectangular, sinusoidal, or triangular waveform.

**8.** The circuit of claim 7 where the carrier signals (car1, car2) are clock signals having a rectangular waveform.

**9.** The circuit of one of claims 1 to 8 where the carrier signals (car1, car2) have frequencies that are different from each other.

**10.** The circuit of one of claims 1 to 9 where the controllable element (1) is a transistor.

**11.** The circuit of one of claims 1 to 10 where the signal processing unit (4, 5, 10, 11) is a modulator.

**Patentansprüche**

1. Schaltung, umfassend:

   ein steuerbares Element (1), das einen Strom in Reaktion auf ein Steuersignal (8) steuert, das dem steuerbaren Element (1) zugeführt wird; und
   eine Steuereinheit (3), die mit dem steuerbaren Element (1) verbunden ist und das Steuersignal (p) bereitstellt; wobei die Steuereinheit (3) Folgendes umfasst:

   eine erste Signalverarbeitungseinheit (4, 10) mit einem Ausgang, der ein erstes Trägersignal (car1) und ein Eingangssignal (r) zugeführt wird;
   eine zweite Signalverarbeitungseinheit (5, 11) mit einem Ausgang, der ein zweites Trägersignal (car2) und das Eingangssignal (r) zugeführt wird, wobei das erste und das zweite Trägersignal (car1, car2) unterschiedliche Frequenzen aufweisen; und
   eine Kombinationseinheit (6, 7, 12, 13, 14, 15, 16), die mit der ersten und zweiten Signalverarbeitungseinheit verbunden ist und die Ausgänge der ersten und zweiten Signalverarbeitungseinheit kombiniert, um ein Signal zu bilden, das das Steuersignal (p) darstellt,
   wobei das steuerbare Element (1) ein steuerbarer Schalter ist, der den Laststrom abhängig vom Steuersignal (p) ein- und ausschaltet,
   wobei die Kombinationseinheit (6, 7, 12, 13, 14, 15, 16) eine Logikeinheit ist, die dazu angepasst ist, die Ausgänge der ersten und zweiten Signalverarbeitungseinheit zu kombinieren, um ein Binärsignal zu bilden, das das Steuersignal (p) darstellt,
   wobei die Logikeinheit ein erstes AND-Gate (12), ein erstes OR-Gate (15) und ein zweites OR-Gate (16) umfasst, die jeweils wenigstens zwei Eingänge und einen Ausgang aufweisen; wobei die Eingänge des ersten AND-Gate (12) und des ersten OR-Gate (15) jeweils an die Ausgänge der Signalverarbeitungseinheiten (10, 11) gekoppelt sind; die Ausgänge des ersten AND-Gate (12) und des ersten OR-Gate (15) an die Eingänge des zweiten OR-Gate (16) gekoppelt sind, dessen Ausgang das Steuersignal (p) bereitstellt; und
   wobei die Logikeinheit ferner ein zweites AND-Gate (13) und ein drittes AND-Gate (14) umfasst, die jeweils zwei oder mehr Eingänge und einen Ausgang aufweisen; wobei dem zweiten AND-Gate (13) ein differenziertes Hauptträgersignal und der Ausgang des ersten AND-Gate (12) zugeführt wird; dem dritten AND-Gate (14) das invertierte differenzierte Hauptträgersignal und der Ausgang des ersten OR-Gate (15) zugeführt wird; und das zweite OR-Gate (16) mit den Ausgängen des zweiten und dritten AND-Gate (13, 14) verbunden ist und das Steuersignal (p) bereitstellt.

2. Schaltung nach Anspruch 1, wobei eins der Trägersignale (car1, car2) ein Hauptträgersignal (car1) ist, das eine bestimmte Flanke umfasst, und wobei der Ausgang des ersten AND-Gate (12) oder des ersten OR-Gate (15) das Steuersignal (p) bereitstellt, das von der Flanke des Hauptträgersignals (car1) abhängt.

3. Schaltung, umfassend:

   ein steuerbares Element (1), das einen Strom in Reaktion auf ein Steuersignal (8) steuert, das dem steuerbaren Element (1) zugeführt wird; und
   eine Steuereinheit (3), die mit dem steuerbaren Element (1) verbunden ist und das Steuersignal (p) bereitstellt; wobei die Steuereinheit (3) Folgendes umfasst:

   eine erste Signalverarbeitungseinheit (4, 10) mit einem Ausgang, der ein erstes Trägersignal (car1) und ein Eingangssignal (r) zugeführt wird;
   eine zweite Signalverarbeitungseinheit (5, 11) mit einem Ausgang, der ein zweites Trägersignal (car2) und das Eingangssignal (r) zugeführt wird, wobei das erste und das zweite Trägersignal (car1, car2) unterschiedliche Frequenzen aufweisen; und
   eine Kombinationseinheit (6, 7, 12, 13, 14, 15, 16), die mit der ersten und zweiten Signalverarbeitungseinheit verbunden ist und die Ausgänge der ersten und zweiten Signalverarbeitungseinheit kombiniert, um ein Signal zu bilden, das das Steuersignal (p) darstellt,
   wobei das steuerbare Element (1) ein steuerbarer Schalter ist, der den Laststrom abhängig vom Steuersignal (p) ein- und ausschaltet,
   wobei die Kombinationseinheit (6, 7, 12, 13, 14, 15, 16) eine Logikeinheit ist, die dazu angepasst ist, die Ausgänge der ersten und zweiten Signalverarbeitungseinheit zu kombinieren, um ein Binärsignal zu bilden, das das Steuersignal (p) darstellt,

wobei die Logikeinheit ein erstes AND-Gate (12), ein erstes OR-Gate (15) und ein zweites OR-Gate (16) umfasst, die jeweils wenigstens zwei Eingänge und einen Ausgang aufweisen; wobei die Eingänge des ersten AND-Gate (12) und des ersten OR-Gate (15) jeweils an die Ausgänge der Signalverarbeitungseinheiten (10, 11) gekoppelt sind; die Ausgänge des ersten AND-Gate (12) und des ersten OR-Gate (15) an die Eingänge des zweiten OR-Gate (16) gekoppelt sind, dessen Ausgang das Steuersignal (p) bereitstellt; und

wobei das Steuersignal (p) Pulse umfasst und das Steuersignal alternierend mit jedem Puls vom ersten OR-Gate (15) oder vom ersten AND-Gate (12) bereitgestellt wird.

4. Schaltung nach Anspruch 3, wobei
   die Logikeinheit ferner ein zweites AND-Gate (13), ein drittes AND-Gate (14) und ein Abtastelement (9) umfasst, die jeweils einen oder mehrere Eingänge und einen Ausgang aufweisen;
   einem Eingang des Abtastelements (a) das invertierte Ausgangssignal des Abtastelements (9) zugeführt wird;
   das zweite AND-Gate (13) mit dem nicht invertierten Ausgang des Abtastelements (9) und dem ersten AND-Gate (12) verbunden ist;
   das dritte AND-Gate (14) mit dem invertierten Ausgang des Abtastelements (a) und dem Ausgang des ersten OR-Gate (15) verbunden ist; und
   das zweite OR-Gate (16) mit den Ausgängen des zweiten und dritten AND-Gate (13, 14) verbunden ist und das Steuersignal (p) bereitstellt.

5. Schaltung nach einem der Ansprüche 1 bis 4, wobei die Signalverarbeitungseinheiten (4, 5, 10, 11) Komparatoren umfassen, die jeweils Eingänge und einen Ausgang aufweisen; wobei den Eingängen das Eingangssignal (r) und eines der Trägersignale (car1, car2) zugeführt wird.

6. Schaltung nach einem der Ansprüche 1 bis 5, wobei die Signalverarbeitungseinheiten (4, 5, 10, 11) dazu angepasst sind, pulsweitenmodulierte Signale zu erzeugen.

7. Schaltung nach einem der Ansprüche 1 bis 6, wobei die Trägersignale (car1, car2) eine rechteckige, sinusförmige oder dreieckige Wellenform aufweisen.

8. Schaltung nach Anspruch 7, wobei die Trägersignale (car1, car2) Taktsignale mit einer rechteckigen Wellenform sind.

9. Schaltung nach einem der Ansprüche 1 bis 8, wobei die Trägersignale (car1, car2) Frequenzen aufweisen, die voneinander verschieden sind.

10. Schaltung nach einem der Ansprüche 1 bis 9, wobei das steuerbare Element (1) ein Transistor ist.

11. Schaltung nach einem der Ansprüche 1 bis 10, wobei die Signalverarbeitungseinheit (4, 5, 10, 11) ein Modulator ist.

**Revendications**

1. Circuit comprenant :

   un élément contrôlable (1) qui régule une intensité en réponse à un signal de contrôle (8) transmis à l'élément contrôlable (1) ; et
   une unité de commande (3) reliée à l'élément contrôlable (1) et émettant le signal de commande (p) ; l'unité de commande (3) comprenant :

   une première unité de traitement des signaux (4, 10) comportant une sortie et étant dotée d'un premier signal porteur (car1) et d'un signal d'entrée (r) ;
   une deuxième unité de traitement des signaux (5, 11) comportant une sortie et étant dotée d'un deuxième signal porteur (car2) et du signal d'entrée (r), les premier et deuxième signaux porteurs (car1, car2) ayant des fréquences différentes ; et
   une unité de combinaison (6, 7, 12, 13, 14, 15, 16) reliée aux première et deuxième unités de traitement des signaux combinant les sorties des première et deuxième unités de traitement des signaux pour former un signal représentatif du signal de contrôle (p), l'élément contrôlable (1) étant un interrupteur contrôlable qui amène le courant de charge à passer ou non en fonction du signal de contrôle (p),

l'unité de combinaison (6, 7, 12, 13, 14, 15, 16) étant une unité logique qui est conçue pour combiner les sorties des première et deuxième unités de traitement des signaux pour former un signal binaire représentatif du signal de contrôle (p),

l'unité logique comprenant une première porte ET (12), une première porte OU (15) et une deuxième porte OU (16), chacune ayant au moins deux entrées et une sortie ; les entrées de la première porte ET (12) et de la première porte OU (15) étant chacune couplée aux sorties des unités de traitement des signaux (10, 11) ; les sorties de la première porte ET (12) et de la première porte OU (15) étant couplées aux entrées de la deuxième porte OU (16) dont la sortie produit le signal de contrôle (p) ; et

l'unité logique comprenant en outre une deuxième porte ET (13) et une troisième porte ET (14), chacune ayant au moins deux entrées et une sortie ; la deuxième porte ET (13) étant alimentée par un signal porteur maître différentié et par la sortie de la première porte ET (12) ; la troisième porte ET (14) étant alimentée par le signal porteur maître différentié inversé et par la sortie de la première porte OU (15) ; et la deuxième porte OU (16) étant reliée aux sorties des deuxième et troisième portes ET (13, 14) en produisant le signal de contrôle (p).

2. Circuit selon la revendication 1, où un des signaux porteurs (car1, car2) est un signal porteur maître (car1) qui comprend une certaine pente et où la sortie de la première porte ET (12) ou de la première porte OU (15) produit le signal de contrôle (p) qui dépend de la pente du signal porteur maître (car1).

3. Circuit comprenant :

un élément contrôlable (1) qui régule une intensité en réponse à un signal de contrôle (8) transmis à l'élément contrôlable (1) ; et

une unité de commande (3) reliée à l'élément contrôlable (1) et émettant le signal de commande (p) ; l'unité de commande (3) comprenant :

une première unité de traitement des signaux (4, 10) comportant une sortie et étant dotée d'un premier signal porteur (car1) et d'un signal d'entrée (r) ;

une deuxième unité de traitement des signaux (5, 11) comportant une sortie et étant dotée d'un deuxième signal porteur (car2) et du signal d'entrée (r), les premier et deuxième signaux porteurs (car1, car2) ayant des fréquences différentes ; et

une unité de combinaison (6, 7, 12, 13, 14, 15, 16) reliée aux première et deuxième unités de traitement des signaux combinant les sorties des première et deuxième unités de traitement du signaux pour former un signal représentatif du signal de contrôle (p),

l'élément contrôlable (1) étant un interrupteur contrôlable qui amène le courant de charge à passer ou non en fonction du signal de contrôle (p),

l'unité de combinaison (6, 7, 12, 13, 14, 15, 16) étant une unité logique qui est conçue pour combiner les sorties des première et deuxième unités de traitement des signaux pour former un signal binaire représentatif du signal de contrôle (p),

l'unité logique comprenant une première porte ET (12), une première porte OU (15) et une deuxième porte OU (16), chacune ayant au moins deux entrées et une sortie ; les entrées de la première porte ET (12) et de la première porte OU (15) étant chacune couplée aux sorties des unités de traitement des signaux (10, 11) ; les sorties de la première porte ET (12) et de la première porte OU (15) étant couplées aux entrées de la deuxième porte OU (16) dont la sortie produit le signal de contrôle (p) ; et

le signal de contrôle (p) comprenant des impulsions et alternant avec chaque impulsion, le signal de contrôle étant émis par la première porte OU (15) ou par la première porte ET (12).

4. Circuit selon la revendication 3, où

l'unité logique comprend en outre une deuxième porte ET (13), une troisième porte ET (14) et un élément d'échantillon (9), chacun ayant au moins une entrée et une sortie ;

une entrée de l'élément d'échantillon (a) étant alimentée par le signal inversé de sortie de l'élément d'échantillon (9) ;

la deuxième porte ET (13) étant connectée à la sortie non inversée de l'élément d'échantillon (9) et à la première porte ET (12) ;

la troisième porte ET (14) étant connectée à la sortie inversée de l'élément d'échantillon (a) et à la sortie de la première porte OU (15) ; et

la deuxième porte OU (16) étant connectée aux sorties des deuxième et troisième portes ET (13, 14) et émettant le signal de commande (p).

**5.** Circuit selon l'une des revendications 1 à 4, où les unités de traitement des signaux (4, 5, 10, 11) comprennent des comparateurs dont chacun comporte des entrées et une sortie ; les entrées sont alimentées par le signal d'entrée (r) et par l'un des signaux porteurs (car1, car2).

**6.** Circuit selon l'une des revendications 1 à 5, où les unités de traitement des signaux (4, 5, 10, 11) sont conçues pour produire des signaux modulés selon la largeur des impulsions.

**7.** Circuit selon l'une des revendications 1 à 6, où les signaux porteurs (car1, car2) ont une forme d'onde rectangulaire, sinusoïdale ou triangulaire.

**8.** Circuit selon la revendication 7, où les signaux porteurs (car1, car2) sont des signaux d'horloge dont la forme d'onde est rectangulaire.

**9.** Circuit selon l'une des revendications 1 à 8, où les signaux porteurs (car1, car2) ont des fréquences qui diffèrent les unes des autres.

**10.** Circuit selon l'une des revendications 1 à 9, où l'élément contrôlable (1) est un transistor.

**11.** Circuit selon l'une des revendications 1 à 10, où l'unité de traitement des signaux (4, 5, 10, 11) est un modulateur.

FIG 1

FIG 2

FIG 3

FIG 4

FIG 5

FIG 6

OR             AND

| $in_1$ | $in_2$ | out. |
|------|------|------|
| 0 | 0 | 0 |
| 0 | 1 | 1 |
| 1 | 0 | 1 |
| 1 | 1 | 1 |

mean value = 75 % ones

| $in_1$ | $in_2$ | out. |
|------|------|------|
| 0 | 0 | 0 |
| 0 | 1 | 0 |
| 1 | 0 | 0 |
| 1 | 1 | 1 |

mean value = 25 % ones

FIG 7

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \ \text{Hz} \cdot t)$

f) two tone spectrum
on logarithmic scale
$x = 0.35 \cdot \sin(2 \cdot \pi \cdot 1 \ \text{Hz} \cdot t)$
$+0.45 \cdot \sin(2 \cdot \pi \cdot 4 \ \text{Hz} \cdot t)$

FIG 8

ORed MCM

a) single tone waveforms

ORed MCM

b) two tone waveforms

ORed MCM

c) single tone spectrum on linear scale

ORed MCM

d) two tone spectrum on linear scal

ORed MCM

e) single tone spectrum
on logarithmic scale
$x = 0.6 \cdot \sin(2 \cdot \pi \cdot 1 \text{ Hz} \cdot t)$

ORed MCM

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

**FIG 9**

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \text{ Hz} \cdot t)$

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

FIG 10

FIG 11

FIG 13

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \ \mathrm{Hz} \cdot t)$

f) two tone spectrum
on logarithmic scale
$x = 0.35 \cdot \sin(2 \cdot \pi \cdot 1 \ \mathrm{Hz} \cdot t)$
$+0.45 \cdot \sin(2 \cdot \pi \cdot 4 \ \mathrm{Hz} \cdot t)$

**FIG 12**

a) single tone waveforms

b) two tone waveforms

c) single tone spectrum on linear scale

d) two tone spectrum on linear scal

e) single tone spectrum
on logarithmic scale
$x = 0.6 \cdot \sin(2 \cdot \pi \cdot 1 \text{ Hz} \cdot t)$

f) two tone spectrum
on logarithmic scale
$x = 0.35 \cdot \sin(2 \cdot \pi \cdot 1 \text{ Hz} \cdot t)$
$+0.45 \cdot \sin(2 \cdot \pi \cdot 4 \text{ Hz} \cdot t)$

FIG 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007097389 B
- US 20070176660 A1
- US 20030103361 A1